# EUROPÄISCHE PATENTSCHRIFT

(11) **EP 3 450 629 B1**
(45) Veröffentlichungstag und Bekanntmachung des Hinweises auf die Patenterteilung: **17.03.2021**
(21) Anmeldenummer: 18196568.2
(22) Anmeldetag: 22.06.2017
(51) Int. Cl.: E01F 15/04, F16B 25/00

(54) **FAHRZEUGRÜCKHALTESYSTEM MIT BETONSCHRAUBE**
VEHICLE RESTRAINT SYSTEM WITH CONCRETE SCREW
SYSTÈME DE PROTECTION DE VÉHICULE AVEC VIS POUR BÉTON

(30) Priorität: 28.09.2016 DE 102016118394
(43) Veröffentlichungstag der Anmeldung: 06.03.2019
(62) Teilanmeldung aus: 17177317.9
(73) Patentinhaber: Bochumer Eisenhütte Heintzmann GmbH & Co. Bau- und Beteiligungs-KG, 44793 Bochum (DE)
(72) Erfinder: Laß, Horst, 44867 Bochum (DE); Klein, Walter, 54346 Mehring (DE); Heimann, Werner, 66583 Spiesen-Elversberg (DE); von Linsingen-Heintzmann, Barbara, 44867 Bochum (DE)
(74) Vertreter: Osterhoff, Utz

(56) Entgegenhaltungen:
- EP-A1- 1 428 937
- EP-A1- 1 710 453
- EP-A2- 0 955 476
- EP-A2- 1 167 628
- WO-A1-00/73671
- DE-U1- 20 005 166

## Beschreibung

Die vorliegende Erfindung betrifft ein Fahrzeugrückhaltesystem zur Anordnung an einer Fahrbahn gemäß den Merkmalen im Oberbegriff von Patentanspruch 1.

Die vorliegende Erfindung betrifft weiterhin eine Verwendung einer Betonschraube zur Festlegung einer Leitplankenanordnung gemäß den Merkmalen im Patentanspruch 8.

Aus dem Stand der Technik ist es bekannt, Leitplankenanordnungen im Randbereich einer Fahrbahn anzuordnen. Diese Leitplankenanordnungen werden auch Fahrzeugrückhaltesysteme genannt. Ziel ist es, ein von der Fahrbahn abkommendes Fahrzeug zurückzuhalten, so dass dieses nicht die Fahrbahn verlässt.

Üblicherweise werden hierzu Pfosten in den Boden eingelassen, insbesondere gerammt und an den Pfosten dann schutzweise aneinander gereihte Leitplanken befestigt.

Es gibt auch Anwendungen, bei denen Pfosten auf einem Fundament festgeschraubt werden. Hierzu besteht der Pfosten nur aus dem oberhalb der Fahrbahn sichtbaren Teil. Am unteren Ende ist eine Flanschplatte angeordnet. Mit der Flanschplatte ist der Pfosten dann zumeist auf einem Fundament festgelegt.

Ebenfalls ist es bekannt, Pfosten direkt auf der Fahrbahnoberfläche festzulegen. Hierzu werden Asphaltschrauben verwendet. Für diese Befestigungsmöglichkeit wird zunächst ein Bohrloch hergestellt, dessen Dimensionierung gleich oder größer des Außendurchmessers der Asphaltschraube ist. Dieses Bohrloch wird gereinigt und in das Bohrloch wird eine Verbundmasse, zumeist ein Mörtelverbund eingegeben. Im Anschluss wird die Asphaltschraube in das Bohrloch eingeführt. Nach einer Aushärtezeit wird dann der Pfosten an der Asphaltschraube befestigt. Eine solche Anordnung ist beispielsweise aus der EP 1 428 937 A1 bekannt.

Diese Möglichkeit der Befestigung benötigt zum einen mehr Zeit aufgrund des Aushärte- bzw. Trocknungsvorganges der Verbundmasse und ist nach der Montage nicht sofort vollständig belastbar.

Aus der EP 1 710 453 A1 ist die Befestigung mittels eines Befestigungsankers bekannt. Hierzu wird zunächst ein Befestigungsanker separat in einem entsprechenden Bohrloch mit Verbundmasse befestigt. Nach einer Aushärtezeit kann dann dem zeitlich nachgeschaltet eine Montage eines entsprechenden Befestigungspfostens erfolgen.

Aufgabe der vorliegenden Erfindung ist es daher ein Fahrzeugrückhaltesystem bereitzustellen, das eine besonders einfache, effektive und schnelle Montagemöglichkeit auf einer Fahrbahnoberfläche bietet.

Die zuvor genannte Aufgabe wird erfindungsgemäß mit einem Fahrzeugrückhaltesystem zur Anordnung auf einer Fahrbahn mit den Merkmalen im Patentanspruch 1 gelöst.

Ein verfahrenstechnischer Teil der Aufgabe wird weiterhin durch die Verwendung einer Betonschraube zur Festlegung eines Fahrzeugrückhaltesystems auf einer Fahrbahnoberfläche gemäß den Merkmalen im Patentanspruch 8 gelöst.

Vorteilhafte Ausgestaltungsvarianten der vorliegenden Erfindung sind Gegenstand der abhängigen Ansprüche.

Das Fahrzeugrückhaltesystem zur Anordnung an einer Fahrbahn wird auf einem Boden, insbesondere auf einer Fahrbahnoberfläche fixiert. Das Fahrzeugrückhaltesystem ist aus auf dem Boden festgelegten Leitschwellen ausgebildet. Die Leitschwellen weisen an einem unteren Ende eine Montageschiene auf. Erfindungsgemäß ist nunmehr die Montageschiene durchgreifend eine Betonschraube in einem untermaßigen Bohrloch unter Eingliederung eines frostbeständigen und wasserdichten Klebers befestigt. Während des Festziehvorganges tritt ein Teil des Klebers am oberen Ende des Bohrloches aus und dichtet sowohl die Betonschraube in dem Bohrloch als auch zumindest teilweise den unteren Teil der Montageschiene ab. Kondenswasser sowie Niederschlagswasser kann somit nicht in das Bohrloch eindringen und hier Korrosion hervorrufen. Ein weiterer Vorteil ist, dass keine Feuchtigkeit durch Frosteinwirkung sich ausdehnen kann und somit den festen Sitz der Betonschraube in dem Bohrloch lösen kann. Im Falle des Fahrzeugrückhaltesystems mit Leitschwellen sind die Leitschwellen entweder direkt am Boden befestigt oder aber eine Montageschiene ist am Boden befestigt und die Leitschwellen sind an der Montageschiene gekoppelt.

Das untermaßige Bohrloch ist im Rahmen der Erfindung insbesondere derart ausgebildet, dass ein Innendurchmesser des Bohrloches kleiner ist als ein Außendurchmesser der Gewindegänge der Betonschraube. Bevorzugt ist das Bohrloch selbst gleich groß dem Hauptkörper der Betonschraube ausgebildet. Gegenüber dem Hauptkörper stehen dann die Gewindegänge des Außengewindes über. Diese schneiden sich somit in die Innenmantelfläche des Bohrloches beim Einschraubvorgang der Betonschraube ein.

Der erfindungsgemäße Vorteil ist, dass die Betonschraube während des Einschraubvorganges in einem untermaßigen Bohrloch während des Einschraubvorganges eine maßgeblich formschlüssige Befestigung hervorruft. Nach Festziehen der Betonschraube ist somit das Fahrzeugrückhaltesystem vom ersten Moment an vollständig belastbar. Aus dem Stand der Technik bekannte Asphaltschrauben sind aufgrund der kraftschlüssigen und/oder stoffschlüssigen Klebeverbindung der Verbundmasse erst nach einem Aushärtevorgang belastbar.

Ein weiterer Vorteil ist, dass nach dem Herausschrauben der Betonschraube diese erneut wiederum in das untermaßige Bohrloch unter Eingliederung des Klebers einschraubbar ist. Es könnte gegebenenfalls eine nächst größere Betonschraube verwendet werden, welche erneut einen Gewindegang in das Bohrloch einschneidet.

Bei der Montageplatte handelt es sich um eine Montageschiene. Die Montageschiene ist dazu auf der Fahrbahnoberfläche befestigt. Auch kann eine Leitschwelle bzw. ein Rückhaltekörper an der Montageschiene gekoppelt sein.

In bevorzugter Ausführungsvariante ist die Unterseite der Montageschiene, insbesondere die auf der Fahrbahnoberfläche aufliegende Unterseite der Montageplatte vollständig flächig gegenüber der Fahrbahnoberfläche durch den Kleber abgedichtet. Dies bietet weiterhin den Vorteil in dem Falle, wenn die Montageschiene von Feuchtigkeit oder Wasser untergriffen ist und Frost eintritt, hierdurch eine sukzessive Lockerung aufgrund des Ausdehnens des Wassers vermieden wird.

Der Kleber ist ein insbesondere dauerelastisch aushärtender Kleber. Hierzu können einkomponentige oder zweikomponentige Klebstoffe verwendet werden. Weiterhin besonders bevorzugt weist der Kleber Kriecheigenschaften auf. Der Kleber wird in das hergestellte Bohrloch eingeführt und die Betonschraube eingedreht. Während des Einschraubens der Betonschraube können Fragmentierungen in dem Bohrloch entstehen. Der Kleber kriecht dann in diese Fragmentierung, so dass die Betonschraube formschlüssig in dem Bohrloch gehalten ist. Der Kleber verklebt im Übrigen die Außenmantelfläche der Betonschraube mit der Innenmantelfläche des Bohrloches. Weiterhin besonders bevorzugt ist der Kleber anaerob aushärtend. Somit kann der Kleber auch nach dem Verschrauben, ohne dann dieser eine direkte Verbindung mit Luft aufweist, in dem Bohrloch aushärten.

Die vorliegende Erfindung sieht somit auch eine Verwendung einer Betonschraube zur Festlegung eines Fahrzeugrückhaltesystems auf einer Fahrbahnoberfläche vor. Die Betonschraube ist dazu in ein untermaßiges Bohrloch unter Eingliederung eines frostbeständigen und wasserdichten Klebers eingeschraubt. Während des Einschraubens tritt ein Teil des Klebers an einem oberen Rand des Bohrloches aus und dichtet zwischen der Montageschiene und der Fahrbahnoberfläche ab. Die Fahrbahnoberfläche sowie der größte Teil, insbesondere der vollständige das Bohrloch umgebende Werkstoff ist aus Asphalt bzw. den verschiedenen Asphaltschichten eines Fahrbahnbelages ausgebildet. Weiterhin besonders bevorzugt dichtet der Kleber die gesamte auf der Fahrbahnoberfläche liegende untere Seite der Montageplatte ab.

Die vorliegende Erfindung betrifft somit auch ein Verfahren zum Befestigen eines Fahrzeugrückhaltesystems auf einer Fahrbahnoberfläche. Ein weiterer Vorteil besteht in der Reparaturmöglichkeit. Muss die Leitplankenanordnung altersbedingt und/oder unfallbeding erneuert werden, können die Betonschrauben durch einfaches Herausdrehen gelöst werden. Je nach Zustand der Bohrlöcher können gleichgroße Betonschrauben unter Eingliederung eines Klebstoffes erneut eingedreht werden. Auch besteht die Möglichkeit eine nächstgrößere Betonschraube zu verwenden und diese erneut in das Bohrloch einzudrehen. Im Gegensatz zu mit Verbundmasse befestigten Asphaltschrauben können diese sich gelöst haben, so dass ein erneutes Ausbohren der Verbundmasse sowie eventuell der Asphaltschraube notwendig ist. Dies wird durch die erfindungsgemäße Verwendung von Betonschrauben deutlich vereinfacht.

Die Betonschrauben sind im Sinne der Erfindung einstückig und werkstoffeinheitlich ausgebildet. Diese weisen einen Gewindeabschnitt, optional einen Schaftabschnitt sowie einen Kopf auf. Die Betonschrauben sind insbesondere massiv aus einem metallischen, insbesondere Stahlwerkstoff ausgebildet. Die Betonschrauben können aus nicht rostendem Werkstoff ausgebildet sein oder auch eine Korrosionsschutzschicht aufweisen.

Weitere Vorteile, Merkmale, Eigenschaften und Aspekte der vorliegenden Erfindung sind Gegenstand der nachfolgenden Beschreibung. Bevorzugte Ausgestaltungsvarianten der Erfindung werden in den schematischen Figuren dargestellt. Diese dienen dem einfachen Verständnis der Erfindung. Es zeigen:
Figur 1 eine Querschnittsansicht durch ein Fahrzeugrückhaltesystem mit Pfosten und Leitplanke,
Figur 2 einen Querschnitt durch ein erfindungsgemäßes Fahrzeugrückhaltesystem mit Leitschwelle und
Figur 3 eine Detailansicht gemäß Figur 2.

In den Figuren werden für gleiche oder ähnliche Bauteile dieselben Bezugszeichen verwendet, auch wenn eine wiederholte Beschreibung aus Vereinfachungsgründen entfällt.

Ein Fahrzeugrückhaltesystem 1 weist dazu einen Leitplankenstrang 2 auf, der an einzelnen Pfosten 3 festgelegt ist. Die Pfosten 3 sind dazu auf einer Fahrbahnoberfläche 4 angeordnet und mit dem Untergrund 5 der Fahrbahnoberfläche 4 verschraubt. Erfindungsgemäß ist eine Betonschraube 6 in ein untermaßiges Bohrloch 7 unmittelbar eingeschraubt. Ein Innendurchmesser D7 des Bohrloches 7 ist in etwa gleich groß mit einem Durchmesser D6 des Hauptkörpers des Betonschraube 6. Ein Außengewinde 8 der Betonschraube 6 weist einen Durchmesser D8 auf. Der Durchmesser D8 ist größer als der Durchmesser D6 sowie der Innendurchmesser D7. Beim Festziehen der Betonschraube 6 schneidet sich somit das Außengewinde 8 mit seinen einzelnen Gewindegängen in die Innenmantelfläche 9 des Bohrlochs 7 ein. Die Betonschraube 6 weist somit eine formschlüssige Verbindung zu dem Bohrloch 7 auf.

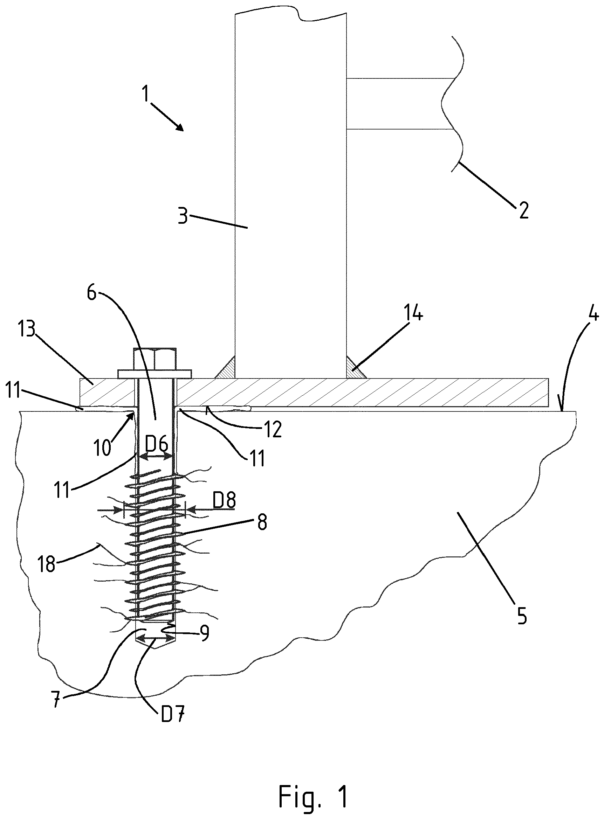

Damit nunmehr keine Feuchtigkeit in das Bohrloch 7 selber, insbesondere an einem oberen Rand 10 des Bohrloches 7 eindringt, wird erfindungsgemäß ein Kleber 11 in dem Bohrloch 7 angeordnet. Bei Eindrehen der Betonschraube 6 verteilt sich dieser Kleber 11 in dem Bohrloch 7 und tritt über den oberen Rand 10 aus. Insbesondere verteilt sich der Kleber 11 an einer Unterseite 12 einer Montageplatte 13 und dichtet gleichzeitig die Unterseite 12 der Montageplatte 13 ebenfalls gegenüber der Fahrbahnoberfläche 4 ab. Nicht näher dargestellt, jedoch bevorzugt ist die gesamte Unterseite 12 der Montageplatte 13 mit ausgetretenen Klebstoff abgedichtet. Die Unterseite 12 liegt in Realität vollflächig auf der Fahrbahnoberfläche 4 auf. Ein eventuell in Figur 1 dargestellter Spalt dient nur zur Illustrierung des Erfindungsgedankens. Weiterhin bevorzugt weist die Betonschraube 6 an dem Außengewinde 8 des vorderen Endes Schneidvorsprünge bzw. Diamantine auf, so dass beim Eindrehen der Betonschraube 6 ein entsprechendes Gewinde in die Innenmantelfläche der Bohrung geschnitten wird.

Der Pfosten 3 ist in dem hier gezeigten Beispiel mit der Montageplatte 13 stoffschlüssig über eine Schweißnaht 14 gekoppelt. Es können weitere Betonschrauben 6 die Montageplatte 13 durchgreifend angeordnet sein.

Ferner dargestellt sind Fragmentierungen 18 bzw. Risse, die während des Bohrens und insbesondere während des Einschraubvorgangs der Betonschraube 6 entstehen können. Optional kann der Kleber 11 in die Fragmentierung 18 bzw. in die Risse kriechen und hier eine stoffschlüssige Verbindung herstellen. Dies sorgt für einen sicheren Sitz der Betonschraube 6 in dem Bohrloch 7.

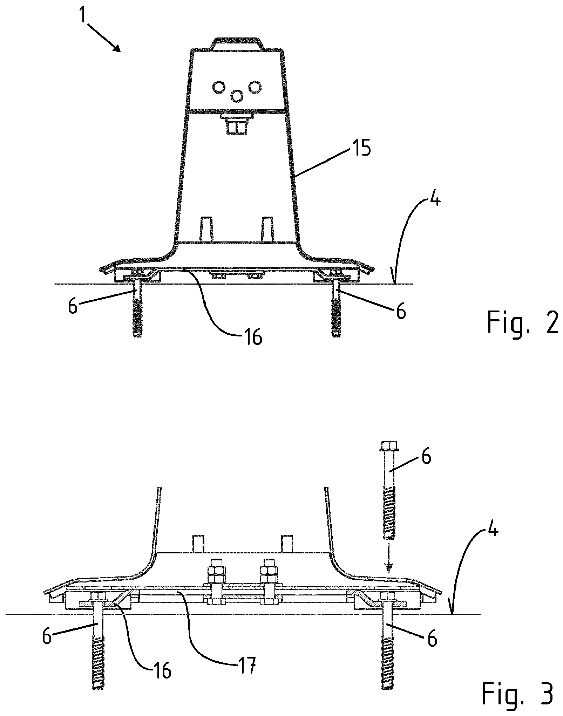

Eine erfindungsgemäße Ausgestaltungsvariante ist dargestellt in Figur 2 und 3. Hierbei ist das Fahrzeugrückhaltesystem 1 nicht ausgebildet durch einen Leitplankenstrang der an Pfosten 3 festgelegt ist, sondern durch Leitschwellen 15 die direkt auf der Fahrbahnoberfläche 4 verschraubt sind. Hier ist eine Montageschiene 16 eingegliedert. Die Leitschwellen 15 sind dann auf der Montageschiene 16 selbst wiederum verschraubt. Die erfindungsgemäßen Betonschrauben 6 koppeln somit die Montageschiene 16 auf der Fahrbahnoberfläche 4. Auch ist es möglich die Leitschwelle 15 direkt auf der Fahrbahnoberfläche 4 zu verschrauben. An der Montageschiene 16 ist ein quer zur Fahrbahnlängsrichtung gerichtetes Langloch 17 ausgebildet. Im Falle der Kollision eines Kraftfahrzeuges mit dem Fahrzeugrückhaltesystem 1 kann sich das Fahrzeugrückhaltesystem 1 auf der Montageschiene 16 entlang des Langloches 17 verschieben.

### Bezugszeichen:

- 1 -: Fahrzeugrückhaltesystem
- 2 -: Leitplankenstrang
- 3 -: Pfosten
- 4 -: Fahrbahnoberfläche
- 5 -: Untergrund zu 4
- 6 -: Betonschraube
- 7 -: Bohrloch
- 8 -: Außengewinde
- 9 -: Innenmantelfläche zu 7
- 10 -: oberer Rand zu 7
- 11 -: Kleber
- 12 -: Unterseite zu 13
- 13 -: Montageplatte
- 14 -: Schweißnaht
- 15 -: Leitschwelle
- 16 -: Montageschiene
- 17 -: Langloch zu 16
- 18 -: Fragmentierung

- D6 -: Durchmesser zu 6
- D7 -: Innendurchmesser zu 7
- D8 -: Durchmesser zu 8

## Patentansprüche

1. Auf einer Fahrbahn angeordnetes Fahrzeugrückhaltsystem (1), umfassend Leitschwellen (15), die auf einer Fahrbahnoberfläche (4) fixiert sind und die Fahrbahnoberfläche (4) aus Asphalt oder verschiedenen Asphaltschichten eines Fahrbahnbelages ausgebildet ist, wobei die Leitschwellen (15) mittels Einschrauben mindestens einer Betonschraube (6) in einem untermaßigen Bohrloch (7) unter Eingliederung eines frostbeständigen und wasserdichten Klebers (11) befestigt sind, dergestalt, dass durch das Einschrauben eine maßgebliche formschlüssige Befestigung erfolgt, wobei ein Überschuss des Klebers (11) zwischen einer Montageschiene (16) und dem oberen Rand (10) des Bohrloches (7) ausgetreten ist und abdichtet, wobei der das Bohrloch (7) vollständig umgebende Werkstoff aus Asphalt oder verschiedenen Asphaltschichten des Fahrbahnbelages ausgebildet ist.

2. Fahrzeugrückhaltesystem nach Anspruch 1, **dadurch gekennzeichnet, dass** die Leitschwelle (15) an die Montageschiene (16) angeschraubt ist.

3. Fahrzeugrückhaltesystem nach Anspruch 1 oder 2, **dadurch gekennzeichnet, dass** der Kleber (11) ein dauerelastisch aushärtender Kleber (11) ist.

4. Fahrzeugrückhaltesystem nach einem der Ansprüche 1 bis 3, **dadurch gekennzeichnet, dass** der Kleber (11) ein einkomponentiger oder zweikomponentiger Kleber (11) ist.

5. Fahrzeugrückhaltesystem nach einem der Ansprüche 1 bis 4, **dadurch gekennzeichnet, dass** der Kleber (11) Kriecheigenschaften besitzt.

6. Fahrzeugrückhaltesystem nach einem der Ansprüche 1 bis 5, **dadurch gekennzeichnet, dass** der Kleber (11) anaerob aushärtend ausgebildet ist.

7. Fahrzeugrückhaltesystem nach einem der Ansprüche 1 bis 6, **dadurch gekennzeichnet, dass** der Kleber (11) die Unterseite (12) der Montageplatte (13) vollständig flächig gegenüber der Fahrbahnoberfläche (4) abdichtet.

8. Verfahren zur Festlegung Fahrzeugrückhaltesystems (1) nach einem der Ansprüche 1 bis 7 mittels einer Betonschraube (6) auf einer Fahrbahnoberfläche (4), wobei die Betonschraube (6) in ein untermaßiges Bohrloch (7) unter Eingliederung eines frostbeständigen und wasserdichten Klebers (11) eingeschraubt wird, dergestalt, dass ein Teil des Klebers (11) an einem oberen Rand (10) des Bohrloches (7) austritt und zwischen der Montageschiene (16) und der Fahrbahnoberfläche (4) abdichtet, wobei der das Bohrloch (7) vollständig umgebende Werkstoff aus Asphalt oder verschiedenen Asphaltschichten eines Fahrbahnbelages ausgebildet ist.

## Claims

1. Vehicle restraint system (1) which is arranged on a roadway, comprising guide barriers (15) which are fixed to a roadway surface (4) formed from asphalt or different asphalt layers of a roadway covering, wherein the guide barriers (15) are secured by means of screwing in at least one concrete screw (6) in an undersized bore hole (7) with a frost-resistant and water-tight adhesive (11) being interposed in such a manner that a considerable form-fit fastening is achieved by the screwing-in , wherein an excess of the adhesive (11) is discharged between an assembly rail (16) and the upper edge (10) of the bore hole (7) and seals, wherein the material which completely surrounds the bore hole (7) is formed from asphalt or different asphalt layers of the roadway covering.

2. Vehicle restraint system according to claim 1, **characterised in that** the guide barrier (15) is screwed to the assembly rail (16).

3. Vehicle restraint system according to claim 1 or 2, **characterised in that** the adhesive (11) is a permanently resilient hardening adhesive (11).

4. Vehicle restraint system according to any one of claims 1 to 3, **characterised in that** the adhesive (11) is a single-component or dual-component adhesive (11).

5. Vehicle restraint system according to any one of claims 1 to 4, **characterised in that** the adhesive (11) has creeping properties.

6. Vehicle restraint system according to any one of claims 1 to 5, **characterised in that** the adhesive (11) is formed to be anaerobically hardening.

7. Vehicle restraint system according to any one of claims 1 to 6, **characterised in that** the adhesive (11) seals the lower side (12) of the assembly plate (13) over the complete surface with respect to the roadway surface (4).

8. Method for securing a vehicle restraint system (1) according to any one of claims 1 to 7 by means of a concrete screw on a roadway surface (4), wherein the concrete screw (6) is screwed into an undersized bore hole (7) with a frost-resistant and water-tight adhesive (11) being interposed in such a manner that a portion of the adhesive (11) is discharged at an upper edge (10) of the bore hole (7) and seals between the assembly rail (16) and the roadway surface (4), wherein the material which completely surrounds the bore hole (7) is formed from asphalt or different asphalt layers of a roadway covering.

## Revendications

1. Système de protection de véhicule (1) agencé sur une chaussée, comprenant des séparateurs de voie (15) qui sont fixés sur une surface de la chaussée (4) et la surface de la chaussée (4) est réalisée en asphalte ou différentes couches d'asphalte d'un revêtement de chaussée, dans lequel les séparateurs de voie (15) sont fixés par vissage d'au moins une vis pour béton (6) dans un trou de perçage sous-dimensionné (7) par intégration d'un adhésif étanche à l'eau et résistant au gel (11), de telle sorte qu'une fixation par assemblage de forme essentiel s'effectue par vissage, dans lequel un excédent d'adhésif (11) est sorti et scelle entre un rail de montage (16) et le bord supérieur (10) du trou de perçage (7), dans lequel le matériau entourant entièrement le trou de perçage (7) est réalisé en asphalte ou en différentes couches d'asphalte du revêtement de chaussée.

2. Système de protection de véhicule selon la revendication 1, **caractérisé en ce que** le séparateur de voie (15) est vissé au rail de montage (16).

3. Système de protection de véhicule selon la revendication 1 ou 2, **caractérisé en ce que** l'adhésif (11) est un adhésif durcissable durablement élastique (11).

4. Système de protection de véhicule selon l'une quelconque des revendications 1 à 3, **caractérisé en ce que** l'adhésif (11) est un adhésif (11) à un composant ou à deux composants (11).

5. Système de protection de véhicule selon l'une quelconque des revendications 1 à 4, **caractérisé en ce que** l'adhésif (11) dispose de caractéristiques de fluage.

6. Système de protection de véhicule selon l'une quelconque des revendications 1 à 5, **caractérisé en ce que** l'adhésif (11) est réalisé thermodurcissable par anaérobie.

7. Système de protection de véhicule selon l'une quelconque des revendications 1 à 6, **caractérisé en ce que** l'adhésif (11) scelle entièrement toute la surface de la face inférieure (12) de la plaque de montage (13) par rapport à la surface de la chaussée (4).

8. Procédé de fixation d'un système de protection de véhicule (1) selon l'une quelconque des revendications 1 à 7 au moyen d'une vis pour béton (6) sur une surface de la chaussée (4), dans lequel la vis pour béton (6) est vissée dans un trou de perçage sous-dimensionné (7) par intégration d'un adhésif étanche à l'eau et résistant au gel (11) de telle sorte qu'une partie de l'adhésif (11) sort au niveau d'un bord supérieur (10) du trou de perçage (7) et scelle entre le rail de montage (16) et la surface de la chaussée (4), dans lequel le matériau entourant entièrement le trou de perçage (7) est réalisé en asphalte ou en différentes couches d'asphalte d'un revêtement de chaussée.
